# EUROPÄISCHE PATENTSCHRIFT

(11) **EP 3 692 275 B1**
(45) Veröffentlichungstag und Bekanntmachung des Hinweises auf die Patenterteilung: **14.09.2022**
(21) Anmeldenummer: 18799669.9
(22) Anmeldetag: 27.09.2018
(51) Int. Cl.: F16H 1/16, F16H 55/06, F16H 55/22, F16H 57/00

(54) **SCHNECKENRAD FÜR EIN SCHNECKENRADGETRIEBE EINER KRAFTFAHRZEUGLENKUNG AUS FASERVERSTÄRKTEM KUNSTSTOFF MIT GEZIELTER ORIENTIERUNG DER FASERN**
WORM GEAR FOR A WORM GEAR MECHANISM OF A MOTOR VEHICLE STEERING SYSTEM MADE FROM FIBRE REINFORCED PLASTIC WITH A TARGETED ORIENTATION OF THE FIBRES
ROUE À VIS SANS FIN POUR ENGRENAGE À VIS SANS FIN D'UNE DIRECTION DE VÉHICULE AUTOMOBILE ENTRAÎNÉE PAR ROUE À VIS SANS FIN, COMPOSÉE DE MATIÈRE PLASTIQUE RENFORCÉE DE FIBRES À ORIENTATION CIBLÉE DES FIBRES

(30) Priorität: 02.10.2017 DE 102017122896
(43) Veröffentlichungstag der Anmeldung: 12.08.2020
(73) Patentinhaber: thyssenkrupp Presta AG, 9492 Eschen (LI); thyssenkrupp AG, 45143 Essen (DE)
(72) Erfinder: ERNSTSON, Gernot, 6800 Feldkirch (AT); PETER, Manuel, 8340 Hinwil (CH)
(74) Vertreter: thyssenkrupp Intellectual Property GmbH
(86) Internationale Anmeldenummer: PCT/EP2018/076249
(87) Internationale Veröffentlichungsnummer: WO 2019/068548

(56) Entgegenhaltungen:
- DE-A1- 19 909 191
- DE-A1-102012 102 776
- DE-C1- 19 712 287
- DE-T2- 60 034 912
- JP-A- S60 206 628
- US-A1- 2007 089 555

## Beschreibung

Die vorliegende Erfindung betrifft ein Schneckenrad für ein Schneckenradgetriebe einer Kraftfahrzeuglenkung mit den Merkmalen des Oberbegriffs des Anspruchs 1, und ein Schneckenradgetriebe für eine Kraftfahrzeuglenkung.

Für den Einsatz elektromechanischer Hilfskraftlenkungen werden unter anderem Getriebe benötigt, welche ein Hilfsdrehmoment von einem Elektromotor auf eine Lenkwelle übertragen. Für gewöhnlich treibt der Elektromotor eine Schnecke an, welche mit einem auf der Lenkwelle drehfest angeordneten Schneckenrad in Eingriff steht. Zur Übertragung von Kräften muss das Schneckenrad eine bestimmte mechanische Festigkeit aufweisen. Zudem ist es gewünscht Geräusche, welche aufgrund des Eingriffs mit der Schnecke entstehen, zu reduzieren.

Es ist bekannt Schneckenräder mit fasergefüllten Kunststoffen im Zahnbereich aus einem Einkomponenten-Kunststoff (1K) oder einem Zweikomponten-Kunststoff (2K) herzustellen.

US2007/089555 zeigt ein Zahnrad mit den Merkmalen des Oberbegriffs des Anspruchs 1.

Aus der Offenlegungsschrift DE 101 19 235 A1 ist ein Kunststoffzahnrad bekannt, dass einen Hauptkörperabschnitt aus einem Verstärkungsfasern enthaltenden Kunstharz aufweist. Ein auf dem Hauptkörperabschnitt angeordneter gezahnter Abschnitt ist aus dem gleichen Kunstharz hergestellt mit dem Unterschied, dass keine Verstärkungsfasern enthalten sind. Im Stand der Technik offenbaren die EP 1 083 112 B1 und EP 1 780 444 B1 aus fasergefüllten Kunststoffen hergestellte Zahnräder, wobei die Fasern ein definiertes Seitenverhältnis haben. Als nachteilig erweisen sich diese Lösungen, weil die Fasern so orientiert sind, dass sie die Oberfläche der Zähne verlassen und damit die Tragfähigkeit und Dauerhaltbarkeit des Zahnrades nicht gewährleistet werden kann.

Es ist daher Aufgabe der vorliegenden Erfindung, ein Kunststoffzahnrad für ein Schneckenradgetriebe einer Kraftfahrzeuglenkung anzugeben, das eine bessere mechanische Festigkeit und eine gute Dauerhaltbarkeit aufweist und zudem die Laufgeräusche reduziert.

Diese Aufgabe wird von einem Schneckenrad für ein Schneckenradgetriebe einer Kraftfahrzeuglenkung mit den Merkmalen des Anspruchs 1 gelöst.

Demnach ist ein Schneckenrad für ein Schneckenradgetriebe einer Kraftfahrzeuglenkung umfassend einen Trägerkörper und eine Vielzahl an Zähnen mit Zahnoberflächen vorgesehen, wobei die Zähne radial nach außen weisen, wobei der Trägerkörper aus einem Verstärkungsfasern enthaltenden Kunststoff gebildet ist und eine Vielzahl von Rippen mit Rippenoberflächen aufweist, die von einem zentralen umlaufenden ringförmigen Steg des Trägerkörpers radial nach außen weisen, und wobei die Zähne im Spritzgussverfahren auf die Rippen des Trägerkörpers aufgebracht sind, wobei die Mehrzahl der Verstärkungsfasern in ihrer Ausrichtung den benachbarten Rippenoberflächen des Trägerkörpers folgt, wobei die Verstärkungsfasern entlang des Rippenprofils der Rippe bei einem 2K-Schneckenrad im Querschnitt ausgerichtet sind, wobei die Verstärkungsfasern in einem Bereich zwischen 0 mm und 1 mm unter der Rippenoberfläche des Rippenprofils der Rippe im Querschnitt entlang des Rippenprofils oder parallel zum Rippenprofil in Längsrichtung ausgerichtet ist. In diesem Fall ist das Schneckenrad aus zwei Komponenten (2K) gebildet und die Zähne werden auf den Rippen separat ausgebildet beziehungsweise separat aufgespritzt. Die Verstärkungsfasern folgen daher der Oberfläche der Rippe oder der Zahnoberfläche des Schneckenrads, so dass die Fasern nicht aus der Rippe oder der Zahnoberfläche herausragen. Unter benachbarter Rippenoberfläche wird der Teil der Rippenoberfläche verstanden, der am nächsten zu der jeweiligen Faser liegt. Unter einer benachbarten Zahnoberfläche wird der Teil der Zahnoberfläche verstanden, der am nächsten zu der benachbarten Faser liegt. Durch die erfindungsgemäße Anordnung der Fasern hat das Schneckenrad eine besonders gute Tragfähigkeit und Dauerhaltbarkeit. Zudem können Laufgeräusche verringert werden.

Unter Mehrzahl wird vorzugsweise mehr als die Hälfte der Verstärkungsfasern, weiter bevorzugt mehr als 75% und weiter bevorzugt mehr als 85% der Verstärkungsfasern verstanden, welche einer bestimmten Ausrichtung folgen.

Vorzugsweise weist der Trägerkörper Verstärkungsrippen auf, die sich radial von dem umlaufenden ringförmigen Steg oder den Zähnen des Schneckenrads in Richtung einer Rotationsachse des Schneckenrads oder der Schneckenradmitte erstrecken. Dabei ist es vorteilhaft, wenn der Trägerkörper auf einer Nabe des Schneckenrades und einem in Radialrichtung daran anschließenden ringförmigen Randbereich angeordnet ist, wobei die Verstärkungsrippen von der seitlichen Oberfläche des ringförmigen Randbereichs hervorragen. Es ist auch denkbar und möglich, dass die Schneckenradmitte von der Nabe und in dem in Radialrichtung daran anschließenden ringförmigen Randbereich umgeben ist.

Erfindungsgemäß sind die Verstärkungsfasern entlang des Rippenprofils der Rippe bei einem 2K-Schneckenrad im Querschnitt ausgerichtet. Dabei ist es bevorzugt, wenn die Verstärkungsfasern in einem Bereich zwischen 0 mm und 1 mm unter entlang der Rippenoberfläche des Rippenprofils der Rippe im Querschnitt ausgerichtet sind. Es ist weiterhin denkbar und möglich, dass die Verstärkungsfasern sich im Querschnitt von der Rippenoberfläche bis zum Steg erstrecken oder von der äußeren Zahnoberfläche, welche mit der Schnecke kämmt, bis zu einem Bereich, in welchem die Verstärkungsrippen vorgesehen sind, erstrecken oder auch die Verstärkungsrippen mit umfassen.

In einer weiteren Ausrichtung sind die Verstärkungsfasern parallel zur Zahnoberfläche bzw. des Rippenprofils der Rippe bei einem 2K-Schneckenrad in Längsrichtung ausgerichtet.

Vorzugsweise bestehen die Verstärkungsfasern oder der faserverstärkte Kunststoff aus Kunstharz oder einem Thermoplast, insbesondere aus Polyamid, Polyacetal, gesättigtem Polyester, Polyether, und/oder Etherketon.

Die Verstärkungsfasern weisen bevorzugt mindestens eine Art von Fasern bestehend aus Metallfasern, Kohlefasern oder Glasfasern auf.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine räumliche Darstellung eines Schneckenradgetriebes einer elektromechanischen Servolenkung,
- Fig. 2:: einen Querschnitt durch das Schneckenradgetriebe der Figur 1,
- Fig. 3:: eine perspektivische Ansicht eines 1K-Schneckenrades (nicht Teil der Erfindung),
- Fig. 4:: eine perspektivische Ansicht eines gespritzten 2K-Schneckenrads,
- Fig. 5:: eine weitere perspektivische Ansicht des 1K- oder 2K-Schneckenrads,
- Fig. 6:: eine schematische Darstellung einer erfindungsgemäßen Orientierung der Fasern in einem faserverstärkten Kunststoffzahnrad, sowie
- Fig. 7:: eine schematische Darstellung einer zweiten erfindungsgemäßen Orientierung der Fasern in einem faserverstärkten Kunststoffzahnrad.

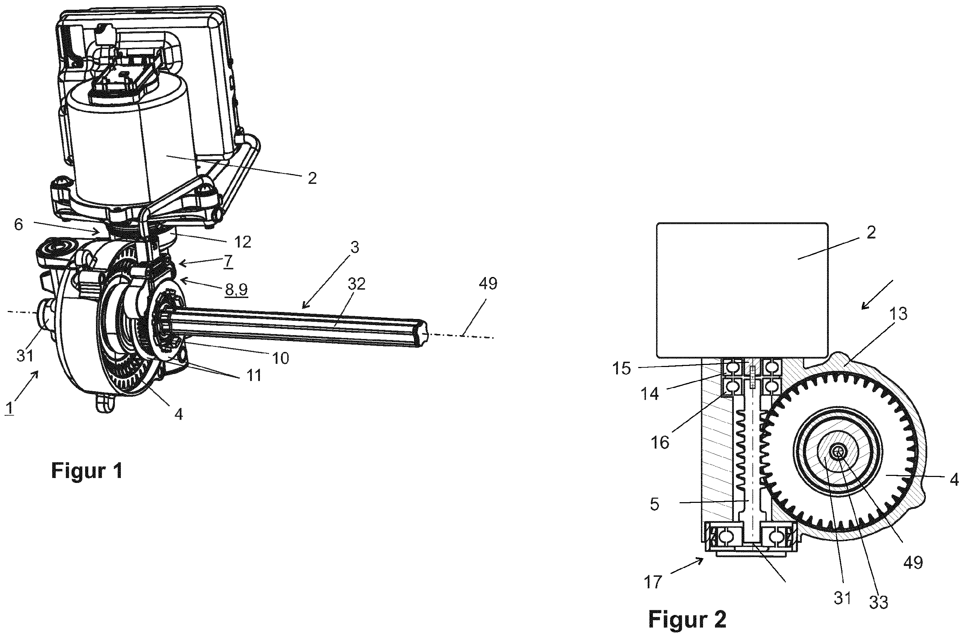

Die Figuren 1 und 2 zeigen ein herkömmliches Schneckengetriebe 1 als Teil einer elektromechanischen Hilfskraftlenkung, welche ein Hilfsdrehmoment von einem Elektromotor 2 auf eine Lenkwelle 3, welche eine obere und eine untere Lenkwelle 32, 31 aufweist, überträgt. Ein Schneckenrad 4 ist vorgesehen, welches mit der Lenkwelle 3 drehfest verbunden ist. Eine Drehung des Schneckenrades 4 um seine Rotationsachse bewirkt den Eintrag einer Hilfskraft beziehungsweise einer Zusatzkraft auf die Lenkwelle 1, um entsprechend eine Hilfskraft beziehungsweise einen Zusatzlenkwinkel in den Lenkstrang einzubringen.

Das Schneckenrad 4 wird über eine Schnecke 5 angetrieben, welche ihrerseits über den Elektromotor 2 angetrieben ist, wobei der Abtrieb 6 des Elektromotors 2 entsprechend zur Drehmomentübertragung mit der Schnecke 5 gekoppelt ist. In der Figur 1 ist weiterhin eine integrale Baueinheit 7 mit einer Drehmomentsensoreinheit 8 und einer Lenkwinkelsensoreinheit 9 vorgesehen. Die Drehmomentsensoreinheit 8 erfasst die Verdrehung der oberen Lenkwelle 32 gegenüber der unteren Lenkwelle 31 als ein Maß des an der oberen Lenkwelle 32 manuell ausgeübten Drehmomentes. Die obere und untere Lenkwelle sind über einen Drehstab 33 miteinander verbunden. Die obere Lenkwelle 32 ist mit einem nicht dargestellten Lenkrad unmittelbar drehfest verbunden. Die untere Lenkwelle weist entlang einer Schneckenradachse 49 eine partielle Verzahnung auf zum formschlüssigen Eingriff mit einer nicht dargestellten Gelenkanordnung, welche wiederrum über eine nicht dargestellte Welle mit einem Lenkgetriebe verbunden werden kann. Die Lenkwinkelsensoreinheit 9 hingegen misst den aktuellen Lenkwinkel der unteren Lenkwelle. Die Drehmomentsensoreinheit 8 weist einen drehfest mit der oberen Lenkwelle verbunden Ringmagneten 10 (Permanentmagneten) und Magnetflussleiter 11 auf. Eine dazugehörige Sensoreinheit 12 ist raumfest mit der Einheit des Elektromotors 2 verbunden.

Figur 2 zeigt das in einem Gehäuse 13 angeordnete Schneckenradgetriebe 1, wobei das Gehäuse 13 ein erstes Wälzlager 14 aufnimmt, welches die Abtriebswelle 15 des Elektromotors 2 radial abstützt. Weiterhin ist ein zweites Wälzlager 16 vorgesehen, in welchem das antriebsseitige Ende der Schnecke 5 radial abgestützt ist. Das dem Abtrieb des Elektromotors 2 gegenüberliegende Ende der Schnecke 5 ist in einer Lagervorrichtung 17 gelagert, welche neben der radialen Lagerung der Schnecke 5 auch einen Winkelausgleich ermöglicht.

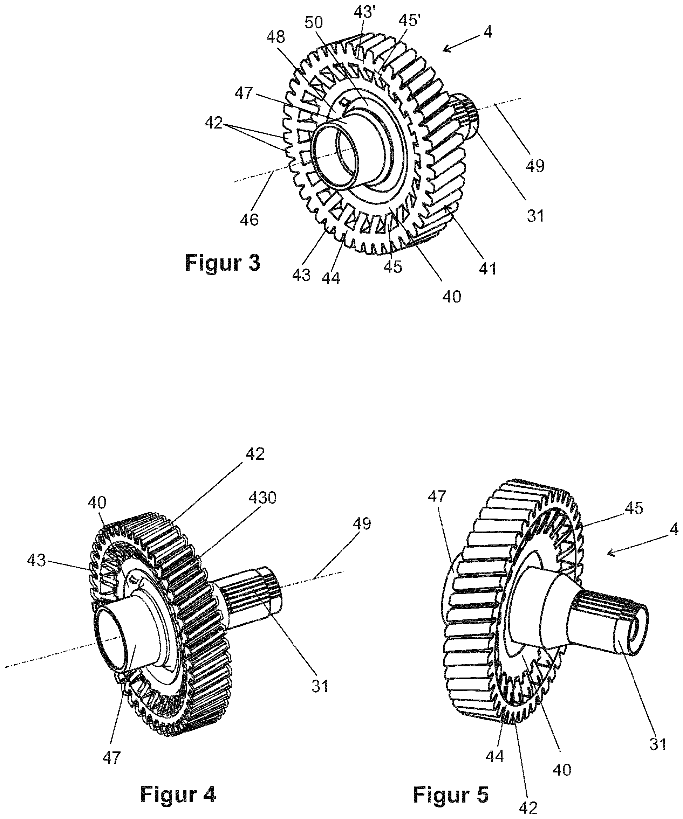

Wie in Figur 3 dargestellt, ist das Schneckenrad 4 aus einem Trägerkörper 40 und Zähnen 42 eines gezahnten Abschnitts 41 gebildet. In der dargestellten Ausführungsform ist das Schneckenrad 4 aus einem einzigen Körper gebildet. Der Trägerkörper 40 und die Zähne 42 sind somit einstückig ausgebildet. Die Zähne 42 weisen dabei jeweils eine Rippe 43 auf, die von einem zentralen umlaufenden ringförmigen Steg 44, welcher sich unmittelbar an die Verzahnung anschließt, des Schneckenrades 4 radial nach außen abgehen. Verstärkungsrippen 45 erstrecken sich radial von dem ringförmigen Steg 44 in Richtung einer Rotationsachse 49 des Schneckenrads oder in Richtung der Schneckenradmitte 46. Der Trägerkörper 40 ist auf einer Nabe 47 des Schneckenrades und einem in Radialrichtung daran anschließenden ringförmigen Randbereich 48 angeordnet. Die Verstärkungsrippen 45 verbinden den bezogen auf die Zähne 42 dünneren oder schmaleren Trägerkörper 40 mit dem verbreiterten Steg 44 und den daran anschließenden Zähnen 42 und dienen als Verstärkung des Schneckenrades 4. Die Verstärkungsrippen 45 ragen daher von der seitlichen Oberfläche 50 des ringförmigen Randbereichs 48 hervor.

Das Schneckenrad 4 wird durch Spritzgießen hergestellt. Vorzugsweise ist das Schneckenrad 4 aus einer Komponente gebildet. Dazu wird ein Kunstharz oder Thermoplast mit Verstärkungsfasern mittels einer Düse und eines Gießlaufs in eine Form gespritzt und zwar derart, dass die Verstärkungsfasern sich tangential zur Zahnoberfläche 420 erstrecken.

Figur 4 zeigt ein Schneckenrad 4 entsprechend dem Schneckenrad aus Figur 3. Dabei handelt es sich um ein 2K-Schneckenrad. Der Trägerkörper 40 hat entsprechend der Schneckenradverzahnung eine Vielzahl an Rippen 43 aufweist, die von dem zentralen umlaufenden ringförmigen Steg 44 des Trägerkörpers 40 radial nach außen weisen. Die Schneckenradverzahnung 42 wird im Spritzgussverfahren auf die Rippen 43 des Trägerkörpers 40 aufgebracht, sodass die Rippen 43 unterhalb der Verzahnung 42 angeordnet sind.

Figur 5 zeigt das 1K-oder 2K-Schneckenrad auf der der unteren Lenkwelle 31 zugewandten Seite. Das Schneckenrad 4 weist auch hier Verstärkungsrippen 450 auf, welche von dem Trägerkörper 40 radial nach außen ragen und zum Steg 44 beziehungsweise in Richtung der Schneckenradverzahnung hin grösser werden.

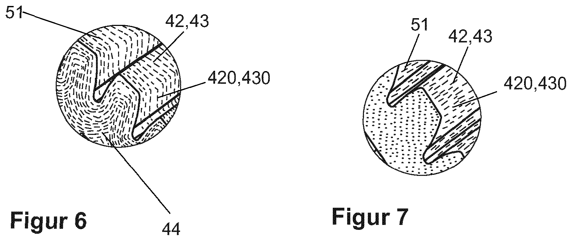

In den Figuren 6 und 7 sind zwei mögliche Ausrichtungen der Verstärkungsfasern dargestellt. Figur 6 zeigt die Ausrichtung der Verstärkungsfasern 51 entlang des Rippenprofils im Querschnitt. Die Verstärkungsfasern folgen dem Zahnprofil. Es ist dabei bevorzugt, wenn die Fasern 51 der Rippenoberfläche 430, vorzugsweise in einem Bereich zwischen 0mm und 1mm unter der Oberfläche 420, 430, im Wesentlichen nicht die Querschnittsebene verlassen. Die Fasern 51 können, wie in Figur 6 dargestellt, bis hin zum Steg 44 reichen und diesen mit umfassen und sich entsprechend der Verzahnungs-oder Rippenoberflächenform entlang des Querschnitts anschmiegen. In der Figur 7 sind die Fasern 51 im Wesentlichen parallel zur Rotationsachse 49 des Schneckenrades 4 ausgerichtet. Die Verstärkungsfasern 51 sind dabei parallel zur Rippenoberfläche 430 in Längsrichtung ausgerichtet. Die Faserenden ragen dabei lediglich in den Querschnitt hinein oder aus diesem heraus, was in der Figur als Punkte dargestellt ist. Bei dieser Ausführungsform können sich die Fasern von der nach außen ragenden Rippenoberfläche bis zum ringfömigen Steg ragen oder nur an der Rippenoberfläche vorgesehen sein. Beide Ausrichtungsformen haben gemeinsam, dass die Fasern 51 so orientiert sind, dass sie die Zahnoberfläche 420 im Wesentlichen nicht verlassen.

Die Ausrichtung der Fasern 51 kann durch unterschiedliche Gestaltungen des Schneckenrades 4 und des Spritzgießens erreicht werden.

In einem Beispiel ist vorgesehen, dass der flüssige Kunststoff über einen zentrischen Anspritzpunkt in der Schneckenradmitte, von einer Seite her in die Form eingebracht wird. Die Zähne werden dadurch radial gefüllt und die Fasern orientieren sich gemäß Figur 6. Dabei ist es bevorzugt, wenn der zentrale Steg bis zur Verzahnung eine möglichst geringe Exzentrizität aufweist oder anders gesagt, gerade radial nach außen verläuft.

In einem anderen Beispiel können mehrere Anspritzpunkte vorgesehen sein. Beispielsweise kann das Schneckenrad mit sechs Düsen im Spritzgussverfahren hergestellt werden, die gleichmäßig über den Umfang verteilt angeordnet sind. Bei Merfachanspritzpunkten muss die Wandstärke 43' der Rippen 43 im Querschnitt und das Wandstärkenverhältnis zwischen der Wandstärke 43' der Rippen 43 und der Wandstärke 45' der Verstärkungsrippen 45 entsprechend gewählt werden. Dies ist unter anderem abhängig von der Anzahl und Positionen von Heißkanälen, der Dicke der Grundwandstärke, der Fließfähigkeit des Kunststoffs oder der Steifigkeit der Rippe. Weitere Faktoren sind die Exzentrizität vom Mittelsteg oder die Exzentrizität vom Anspritzpunkt zum Mittelsteg.

Dabei ist es bevorzugt, wenn die Rippen 43 und die Verstärkungsrippen 45 versetzt zueinander angeordnet sind und somit eine einfachere Befüllung ermöglichen und um eine Lunkerbildung zu vermeiden.

Erfindungsgemäß ist vorgesehen, dass es sich bei dem Schneckenrad um ein Zweikomponenten-Rad handelt und der Trägerkörper und die Zähne als zwei Komponenten hergestellt werden. Dabei wird im Bereich der Verzahnung ein Kunststoff zur Ausbildung der Zähne auf die Rippen des Trägerkörpers aufgespritzt. Der Trägerkörper wird dabei, wie oben beschrieben im Spritzgussverfahren hergestellt und hat die oben beschriebene Ausrichtung der Fasern, die der Trägerkörperoberfläche bzw. Rippenoberfläche folgen.

## Patentansprüche

1. Schneckenrad (4) für ein Schneckenradgetriebe (1) einer Kraftfahrzeuglenkung umfassend einen Trägerkörper (40) und eine Vielzahl an Zähnen (42) mit Zahnoberflächen (420), wobei die Zähne (42) radial nach außen weisen, wobei der Trägerkörper (40) aus einem Verstärkungsfasern (51) enthaltenden Kunststoff gebildet ist und eine Vielzahl von Rippen (43) mit Rippenoberflächen (430) aufweist, die von einem zentralen umlaufenden ringförmigen Steg (44) des Schneckenrades (4) radial nach außen weisen, und wobei die Zähne (42) im Spritzgussverfahren auf die Rippen (43) des Trägerkörpers (40) aufgebracht sind, wobei die Verstärkungsfasern (51) ausgerichtet sind, **dadurch gekennzeichnet, dass** die Mehrzahl der Verstärkungsfasern (51) in ihrer Ausrichtung den benachbarten Rippenoberflächen (430) des Trägerkörpers, wobei die Verstärkungsfasern (51) entlang des Rippenprofils der Rippe (43) bei einem 2K-Schneckenrad im Querschnitt ausgerichtet sind, wobei die Verstärkungsfasern (51) in einem Bereich zwischen 0 mm und 1 mm unter der Rippenoberfläche (430) des Rippenprofils der Rippe (43) im Querschnitt entlang des Rippenprofils oder parallel zum Rippenprofil in Längsrichtung ausgerichtet ist.

2. Schneckenrad nach Anspruch 1, **dadurch gekennzeichnet, dass** der Trägerkörper (40) Verstärkungsrippen (45) aufweist, die sich radial von dem umlaufenden ringförmigen Steg (44) in Richtung einer Rotationsachse (49) des Schneckenrads (4) erstrecken.

3. Schneckenrad nach Anspruch 2, **dadurch gekennzeichnet, dass** der Trägerkörper (40) auf einer Nabe (47) des Schneckenrades (4) und einem in Radialrichtung daran anschließenden ringförmigen Randbereich (48) angeordnet ist, wobei die Verstärkungsrippen (45) von der seitlichen Oberfläche (50) des ringförmigen Randbereichs (48) hervorragen.

4. Schneckenrad nach einem der vorhergehenden Ansprüche, **dadurch gekennzeichnet, dass** die Verstärkungsfasern (51) aus Kunstharz, insbesondere aus Polyamid, Polyacetal, gesättigtem Polyester, Polyether, und/oder Etherketon besteht.

5. Schneckenrad nach einem der vorhergehenden Ansprüche, **dadurch gekennzeichnet, dass** die Verstärkungsfasern (51) mindestens eine Art von Fasern bestehend aus Metallfasern, Kohlefasern oder Glasfasern umfassen.

6. Schneckenradgetriebe (1) für eine Kraftfahrzeuglenkung, mit einem Schneckenrad (4) nach einem der Ansprüche 1 bis 5 und einer mit dem Schneckenrad (4) in Eingriff stehenden Schnecke (5).

## Claims

1. A worm gear (4) for a worm gear mechanism (1) of a motor vehicle steering system, comprising a carrier body (40) and a multiplicity of teeth (42) with tooth surfaces (420), wherein the teeth (42) point radially outward, wherein the carrier body (40) is formed from a plastic comprising reinforcement fibers (51) and has a multiplicity of ribs (43) with rib surfaces (430) which point radially outward from a central encircling ring-shaped web (44) of the worm gear (4), and wherein the teeth (42) are applied to the ribs (43) of the carrier body (40) by injection molding, wherein the reinforcement fibers (51) are oriented, **characterized in that** the multiplicity of reinforcement fibers (51), in terms of their orientation, follow the adjacent rib surfaces (430) of the carrier body, wherein the reinforcement fibers (51) are oriented, in the cross section, along the rib profile of the rib (43) in the case of a 2K worm gear, wherein the reinforcement fibers (51) in a region between 0 mm and 1 mm below the rib surface (430) of the rib profile of the rib (43), are oriented, in the cross section, along the rib profile or parallel to the rib profile in a longitudinal direction.

2. The worm gear as claimed in claim 1, **characterized in that** the carrier body (40) has reinforcement ribs (45) which extend radially from the encircling ring-shaped web (44) in the direction of an axis of rotation (49) of the worm gear (4).

3. The worm gear as claimed in claim 2, **characterized in that** the carrier body (40) is arranged on a hub (47) of the worm gear (4) and on a ring-shaped edge region (48) adjoining said hub in a radial direction, wherein the reinforcement ribs (45) project from the lateral surface (50) of the ring-shaped edge region (48).

4. The worm gear as claimed in any of the preceding claims, **characterized in that** the reinforcement fibers (51) are composed of synthetic resin, in particular of polyamide, polyacetal, saturated polyester, polyether and/or ether ketone.

5. The worm gear as claimed in any of the preceding claims, **characterized in that** the reinforcement fibers (51) comprise at least one type of fibers composed of metal fibers, carbon fibers or glass fibers.

6. A worm gear mechanism (1) for a motor vehicle steering system, having a worm gear (4) as claimed in any of claims 1 to 5 and having a worm (5) which engages with the worm gear (4).

## Revendications

1. Roue à vis sans fin (4) pour un engrenage à vis sans fin (1) d'une direction de véhicule automobile, comprenant un corps de support (40) et une pluralité de dents (42) avec des surfaces de dents (420), les dents (42) étant orientées radialement vers l'extérieur, le corps de support (40) étant formé d'une matière plastique contenant des fibres de renforcement (51) et présentant une pluralité de nervures (43) avec des surfaces de nervure (430) qui sont orientées radialement vers l'extérieur à partir d'une âme annulaire périphérique centrale (44) de la roue à vis sans fin (4), et les dents (42) étant appliquées par le procédé de moulage par injection sur les nervures (43) du corps de support (40), les fibres de renforcement (51) étant dirigées, **caractérisée en ce que** la majorité des fibres de renforcement (51) dans leur direction les surfaces de nervures voisines (430) du corps de support, les fibres de renforcement (51) étant dirigées dans la section transversale le long du profil de nervure de la nervure (43) dans une roue à vis sans fin 2K, les fibres de renforcement (51) étant dirigées dans une zone comprise entre 0 mm et 1 mm sous la surface de nervure (430) du profil de nervure de la nervure (43) dans la section transversale le long du profil de nervure ou parallèlement au profil de nervure dans la direction longitudinale.

2. Roue à vis sans fin selon la revendication 1, **caractérisée en ce que** le corps de support (40) présente des nervures de renforcement (45) qui s'étendent radialement à partir l'âme annulaire périphérique (44) en direction d'un axe de rotation (49) de la roue à vis sans fin (4).

3. Roue à vis sans fin selon la revendication 2, **caractérisée en ce que** le corps de support (40) est agencé sur un moyeu (47) de la roue à vis sans fin (4) et sur une zone de bord annulaire (48) qui s'y raccorde dans la direction radiale, les nervures de renforcement (45) dépassant de la surface latérale (50) de la zone de bord annulaire (48).

4. Roue à vis sans fin selon l'une quelconque des revendications précédentes, **caractérisée en ce que** les fibres de renforcement (51) sont constituées de résine synthétique, notamment de polyamide, de polyacétal, de polyester saturé, de polyéther et/ou d'éthercétone.

5. Roue à vis sans fin selon l'une quelconque des revendications précédentes, **caractérisée en ce que** les fibres de renforcement (51) comprennent au moins un type de fibres constitué de fibres métalliques, de fibres de carbone ou de fibres de verre.

6. Engrenage à vis sans fin (1) pour une direction de véhicule automobile, comprenant une roue à vis sans fin (4) selon l'une quelconque des revendications 1 à 5 et une vis sans fin (5) en prise avec la roue à vis sans fin (4) .
